# EUROPEAN PATENT SPECIFICATION

(11) **EP 1 677 903 B1**
(45) Date of publication and mention of the grant of the patent: **01.08.2012**
(21) Application number: 04791318.1
(22) Date of filing: 27.10.2004
(51) Int. Cl.: B01J 2/04, F25C 1/00

(54) **PROCESS AND APPARATUS FOR COOLING AND ATOMIZING LIQUID OR PASTY-LIKE SUBSTANCES**
VERFAHREN UND VORRICHTUNG ZUM ABKÜHLEN UND ZERSTÄUBEN VON FLÜSSIGEN ODER PASTÖSEN SUBSTANZEN
PROCEDE ET DISPOSITIF DESTINES A REFROIDIR ET PULVERISER DES SUBSTANCES LIQUIDES OU PATEUSES

(30) Priority: 30.10.2003 EP 03104024
(43) Date of publication of application: 12.07.2006
(73) Proprietor: Merck Serono SA, 1267 Coinsins, Vaud (CH); Messer Italia S.p.A., 10093 Collegno (TO) (IT)
(72) Inventor: MAIO, Mario, I-00019 Tivoli (IT); CHICCO, Daniela, I-10010 Albiano d'Ivrea (IT); DONATI, Luca, I-63017 Porto San Giorgio (IT); ESPOSITO, Pierandrea, I-10015 Ivrea (IT); MENEGOLI, Mauro, 37020 San Floriano (IT); GALLI, Leonardo, 50065 Pontassivie (IT)
(74) Representative: Merck Serono SA - Geneva Intellectual Property
(86) International application number: PCT/EP2004/052674
(87) International publication number: WO 2005/049192

(56) References cited:
- EP-B- 1 027 144
- WO-A-00/56439
- WO-A-03/008082
- US-A- 5 043 280

## Description

### Field of the invention

The invention relates to a process and an apparatus for cooling and atomizing liquid or pasty substances.

### Background of the invention

Cooling processes are used to modify certain properties of substances. The substances to be cooled are generally treated in apparatuses whose cooling action is based on heat-transfer processes between coolant and the substance to be cooled at cooling surfaces. The heat or cold transport between coolant and the substance to be cooled is therefore only indirect. A relatively rapid cooling of the substances, which is very frequently required, cannot be achieved by this means. These cooling processes are also frequently unsuitable for carrying out crystallization or freezing, since insulating deposits form on the cooling surfaces which can impair the cooling process. Cooling processes of this type are, for example, described in Römpp Chemielexikon (Chemistry lexicon) and Pahlmann, Taschenbuch der Kältetechnik (Refrigeration manual).

It is further known that on an industrial level, spraying (nebulizing) towers are used to produce fine powders with the use of conventional refrigeration.

Cryogenic cooling and freezing processes in which low-temperature gases are used are also prior art. Römpp Chemielexikon and Pahlmann, Taschenbuch der Kältetechnik, for example, disclose processes in which the substances to be cooled are sprayed with the refrigerant, in particular with liquid nitrogen or with solid carbon dioxide in the form of dry ice or snow. The direct contact of the refrigerant with the substances leads to a substantially more rapid cooling of the substances than with the above-mentioned conventional processes. For a relatively rapid cooling of liquid or pasty substances this process also is unsuitable, since the cooling in the interior of the substances is determined by the heat transport through the substance itself, and the contact surfaces for a rapid cooling, for example for crystallization, are still too small.

It is virtually impossible with these processes to produce readily meterable flowable substances.

The Cryopel^{®} process, described in US 4,967,571, the Cryobreak^{®} process, described in DE 44 19 010 C1 and the Cryofals^{®} process, described in DE 43 29 110 C1 are known processes in which liquid substances are cooled very rapidly by being introduced drop wise into liquid nitrogen. This cooling process can lead to a meterable pelleted substance. The particle sizes, which are established, are generally in the range of a few millimeters. The cooling is always performed to the temperature of approximately 77 K, which is not necessary or even undesiderable in a multiplicity of applications.

In addition, an apparatus is known in which a liquid substance is brought into contact with liquid nitrogen, with the use of two-jet nozzles, in order to cool the substance rapidly. There is the disadvantage here that the product can be cooled as early as in the nozzle by the low-temperature nitrogen and can block this nozzle.

A further known process is the Variosol^{®} process, described in EP 1 027 144 B1, in which the molten substances are mixed with liquid or supercritical carbon dioxide and then expanded in a spray-tower. This expansion causes the cooling and the atomization of the liquid substances, generating fine powders. The use of this process for producing microparticles suitable for pharmaceutical purposes, like for example those described in WO 02/051386 has the disadvantage of the non-reproducibility of the particle sizes and the large dimension of the same. WO-A-0300802 describes a process wherein a solution is sprayed in a vessel and cooled by liquid CO₂.

### Description of the invention

The object of the invention is to provide a process and an apparatus by which the disadvantages of the prior art are overcome and by which a relatively rapid cooling and atomization of liquid or pasty substances is possible, in particular even relatively small amounts of liquid or pasty substances being able to be cooled and atomized economically.

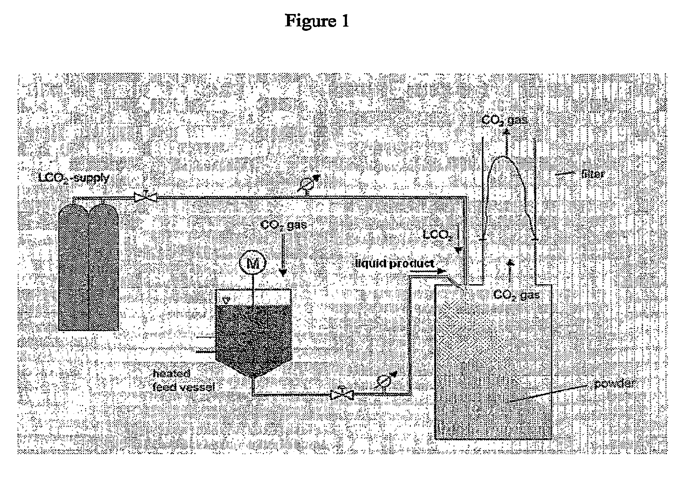

The object is achieved by a process, in which the liquid or pasty substance or mixture of substances and gaseous carbon pass, under pressure, through a nozzle and expand in a spray tower. Simultaneously, from a further nozzle, liquid carbon dioxide is sprayed in the spray tower. The contact between sprayed liquid or pasty substances/ mixture of substances and liquid carbon dioxide causes the instantaneous cooling and atomization of the liquid or pasty substances or mixture of substances. A schematic representation of the process and apparatus is reported in Figure 1.

During the expansion, small particles of liquid or pasty substances/ mixture of substances, spherically-shaped are formed. This leads to a good reproducibility of the process and to a fine particulate with an average diameter comprises between 2 and 100 µm, preferably in ranges of from 5 to 15 µm or from 40 to 80 µm, depending on the nozzle used. Moreover, the particles are always spherically shaped and have a narrow particle size distribution.

Therefore the main object of the invention is to provide a process for cooling and atomizing liquid or pasty substance or mixture of substances, in which a liquid or pasty substance or mixture of substances is combined with gaseous carbon dioxide and the mixture of liquid or pasty substance or mixture of substances and gaseous carbon dioxide is then expanded and cooled by contacting a flux of liquid carbon dioxide, as a result the substance or mixture of substances is cooled and atomized.

A further advantage according to the invention is that by varying the flow ratios of substances/ mixture of substances from the first nozzle and the liquid carbon dioxide from the other nozzle, the final temperature obtained may be varied within broad ranges.

It is envisaged that the liquid carbon dioxide has a pressure from 6 to 72 bar and a temperature from 216 to 304 K, preferably a pressure from 30 to 70 bar and a temperature from 230 to 304 K, and particularly a pressure from 50 to 68 bar and a temperature from 291 to 301 K.

The pressure of gaseous carbon dioxide in the storage vessel is comprised between 1 to 10 bar, preferably in a range from 1.2 and 4.5 bar. The temperature of the gaseous carbon dioxide in the storage vessel is normally comprised between 273 and 304 K, preferably between 291 and 301 K.

This procedure has the advantage that at a preferred pressure range and temperature range the carbon dioxide can be taken off directly from the supply system, for example low-pressure and medium-pressure tanks or carbon dioxide cylinders, without further gas treatment.

According to the invention the mixture of liquid or pasty substance/ mixture of substances and the gaseous carbon dioxide and the liquid carbon dioxide are expanded at pressure from 0 to 60 bar, preferably to a pressure from 0 to 20 bar, and particularly preferably to approximately 1 bar. The expansion to atmospheric pressure (approximately 1 bar) has the advantage that filling can be performed directly into an non-pressurized system.

According to the invention the liquid or pasty substance or mixture of substances and/or the gaseous carbon dioxide and/or the mixture of liquid or pasty substance/ mixture of substances and the gaseous carbon dioxide can be fed to al least one heatable or coolable line. Using a heatable or coolable line, the temperature for the liquid or pasty substance or mixture of substances and/or the gaseous carbon dioxide and/or the mixture of liquid or pasty substance or mixture of substances and the gaseous carbon dioxide can be controlled, in order to set the desired or required process temperature.

According to the invention the liquid or pasty substance or mixture of substances is mixed with the gaseous carbon dioxide in the storage vessel, thanks to a stirrer disposed in such vessel.

The object is further achieved by an apparatus for cooling liquid or pasty substance or mixture of substances which comprises:
a. a storage vessel for the liquid or pasty substance or mixture of substances, to which is allocated a line, in which a device for transporting the liquid or pasty substance or mixture of substances is disposed,
b. a source of liquid carbon dioxide, to which source is allocated a line,
c. a source of gaseous carbon dioxide, to which source is allocated a line which line has a connection with the line transporting the liquid or pasty substance or mixture of substances,
d. an expansion chamber in which the liquid carbon dioxide and the liquid or pasty substance or mixture of substances mixed with the gaseous carbon dioxide are conveyed.

The apparatus is constructed in such a manner that the mixture of liquid or pasty substance/ mixture of substances and gaseous carbon dioxide is not expanded until on exit from the expansion apparatus. A very direct contact takes place out between liquid or pasty substance/ mixture of substances and liquid carbon dioxide achieving cooling and atomization of liquid or pasty substance/ mixture of substances in the spray tower. The apparatus ensures rapid cooling and atomization of the liquid or pasty substance/ mixture of substances. By use of the inventive expansion apparatus, small, easily flowable particles of the liquid or pasty substance/ mixture of substances are produced.

Advantageously, the lines or apparatuses or devices bearing the liquid or pasty substance/ mixture of substances and/or gaseous carbon dioxide and/or liquid carbon dioxide and/or the lines or apparatuses or devices bearing the mixture of the liquid or pasty substance/ mixture of substances and gaseous carbon dioxide have apparatuses for their heating or cooling, in order to set the desired or required temperature in the individual trains bearing carbon dioxide and/or substance/ mixture of substances. The line(s) should preferably be heated or cooled separately. Piping having internals for heating is preferred.

It is envisaged that an apparatus for heating or cooling is allocated to the line allocated to the storage vessel for the liquid or pasty substance/ mixture of substances.

According to the invention, the expansion apparatus has two valves and two nozzles.

The valves used can be open/closed valve or control valves and they are disposed in the lines connecting the spray tower to the storage vessel and the source of liquid carbon dioxide.

The nozzles for the liquid carbon dioxide and for the mixture of liquid or pasty substance/ mixture of substances and gaseous carbon dioxide, advantageously, have a shielding device, preferably a jacket tube. The use of a nozzle having a jacket tube has the advantage that only a small amount of air is taken in or sucked into the stream. The carbon dioxide in this case is at least partially converted into carbon dioxide snow. Typically, approximately 30% by weight of carbon dioxide snow and approximately 70% by weight of gaseous carbon dioxide are formed during the expansion of the liquid carbon dioxide at the nozzle.

Preferably, the tubes of these expansion devices are prepared. This can be performed by polishing or coating or separate heating. According to the invention a coating with Teflon of the inside of the tubes of the expansion devices are particularly preferred.

Furthermore, according to the invention, the nozzle for the expansion of the mixture of the liquid or pasty substance/ mixture of substances and the gaseous carbon dioxide, advantageously, has, at its bottom, an isolating coating in order to prevent the obstruction due to the cooled substance on its surface.

According to the invention the nozzle for the expansion of the mixture of the liquid or pasty substance/ mixture of substances and the gaseous carbon dioxide can be a capillary flow nozzle or a spraying (nebulizing) nozzle.

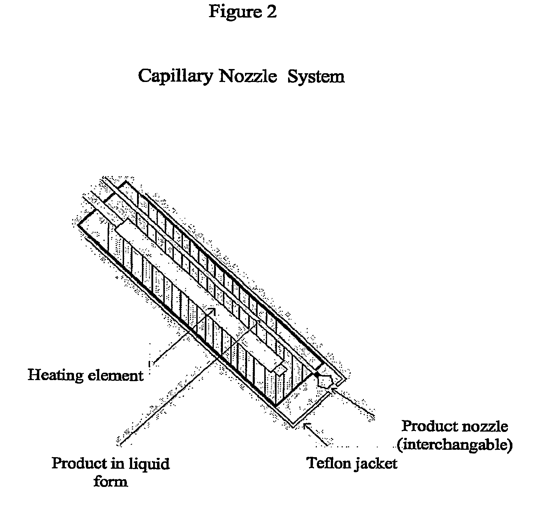

The capillary flow nozzle is a one-component nozzle, which diameter is comprised between 0.05 to 0.25 mm, preferably 0.25 mm or 0.20 or 0.17 or 0.12 or 0.08. It permits to obtain particles with an average particle size in the range from 40 to 80µm. This capillary nozzle is schematically represented in Figure 2.

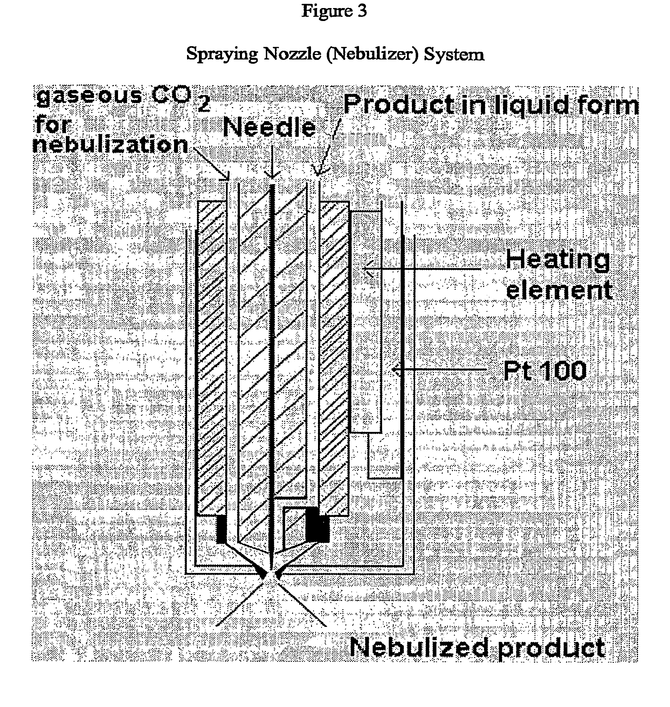

The spraying (nebulizing) nozzle, instead, is a two-component nozzle, which diameter is comprised between 0.05 and 0.25, preferably 0.25, and bearing both the mixture of the liquid or pasty substance/ mixture of substances and the gaseous carbon dioxide and the simple gaseous carbon dioxide, acting as further atomizing agent. It permits to obtain particles with an average particle size in the range from 5 to 15 µm. This spraying (nebulizing) nozzle is schematically represented in Figure 3.

It is envisaged that the gaseous carbon dioxide in the spraying (nebulizing) nozzle has a pressure from 1 to 10 bar and a temperature from 273 to 304 K, preferably a pressure from 3.5 to 7.5 bar and a temperature from 291 to 301 K.

According to the invention, the source of liquid carbon dioxide is thermostated. Preferably this condition is achieved by means of a thermostated cabinet wherein the source is disposed.

The process according to the invention or the apparatus according to the invention can advantageously be used for homogenizing, pulverizing, pelletting, granulating and crystallizing is preferred.

For example, the process and the apparatus of the invention can advantageously be used to prepare microparticles useful in the food industry as well as in the cosmetic or chemical industry.

The process of the invention and the apparatus of the invention are particularly suitable for producing lipid microparticles (microspheres) for pharmaceutical purposes. These microparticles may be constituted by polymers, lipids or mixtures thereof. The lipid or polymeric matrices can contain the active ingredient when they are sprayed in the process of the present invention or the active ingredient may be absorbed on their surface once the microparticles are produced through the process of the present invention.

In case of lipids several lipids with different hydrophilic/hydrophobic characteristics and chemical compositions can be used, such as for example tri-, di- and mono-glycerides, PEG- or PPG-glycerides, saccharide-glycerides, fatty acids, phospholipids and mixture thereof. Such lipid matrices may also contain pharmaceutically acceptable excipients, such as polymers having bioadhesive or absorption enhancing properties and selected from the group comprising or consisting of acrylic polymers (Carbopol^{®}, Polycarbophil, Noveon^{®}), medium chain fatty acids and polyethylene glycols, solubilizers (Cremophor^{®}, Solutol^{®})

The microparticle matrices can also be composed of hydrophilic or hydrophobic polymers, such as PEGs, Poloxamers (such as Lutrol^{®} F68, Lutrol^{®} F 127), polylactic acid (PLA), polyglycolic (PGA) acid, or poly(lactic-co-glycolic acid) (PLGA), polyvinylpyrrolidone (PVP), poly ε caprolactone.

The active ingredient may be a "small organic molecule" of any type or therapeutically effective peptide or protein. Therapeutically effective peptide or protein that may be incorporated into the lipid microparticles may be grouped into 3 main classes:
- regulatory factors including hormones, cytokines, lymphokines, chemokines, their receptors and other regulatory factors of cellular growth and metabolism comprising enzymes;
- blood products including serum-derived blood factors and enzymatic fibrinogen activators;
- monoclonal antibodies.

Proteins or peptides as above-mentioned include, but are not limited to, the following examples: AAT, UK, PUK, streptokinase, tPA, SOD, insulin, GH, GRF, ANF, GnRH, LHRH analogs, erythropoietin, granulocyte CSF, granulocyte macrophage CSF, Interleukin-1, Interleukin-2, Interleukin-3/multipotential CSF, Interleukin-4, Interleukin-5 (or Eosinophil-CSF), Interleukin-6, Interleukin-7, Interleukin-8, Interleukin-9, Interleukin-10, Interleukin-11, interferon-α, interferon-β, interferon-γ, Leukemia inhibitory factor Macrophage CSF,TNF, Stem cell factor, RANTES and its variants, MCP-1 and its variants as well as receptors thereof.

According to a preferred embodiment of the invention, said protein or peptide is selected from the group consisting of Interleukin-6, Interferon-α, Interferon-β, Interferon-γ, IL-18 Binding Protein, GnRH, LHRH analogs, GH, GRF, gonadotropins (like FSH, LH and hCG) and TNF receptors or soluble fragments thereof.

The process of the invention and the apparatus of the invention are also suitable for the micronization of small organic molecules, preferably but not exclusively poorly soluble, alone or in combination with known excipients, surfactants, self-emulsifying agents

The process and the apparatus according to the invention will now be described in more detail by way of examples with reference to Figures.

### Description of the Figures

**Figure 1****:** Schematic representation of process and apparatus
**Figure 2****:** Schematic representation of the capillary nozzle
**Figure 3****:** Schematic representation of the spraying (nebulizing) nozzle
**Figure 4****:** LM made of Imwitor 900 prepared with capillary nozzle
   Laser Diffractometer (LD) results of the Imwitor 900 LM batches prepared under similar process conditions for reproducibility evaluation. (a) Trials with 0.25 mm product nozzle, (b) trials with 0.12 mm product nozzle. The error bars in the histogram graph refer to the standard deviation calculated on three samples from the same batch. Frequency (bell shaped) and undersize (sigma shaped) curves are average curves of three samples from the same batch.

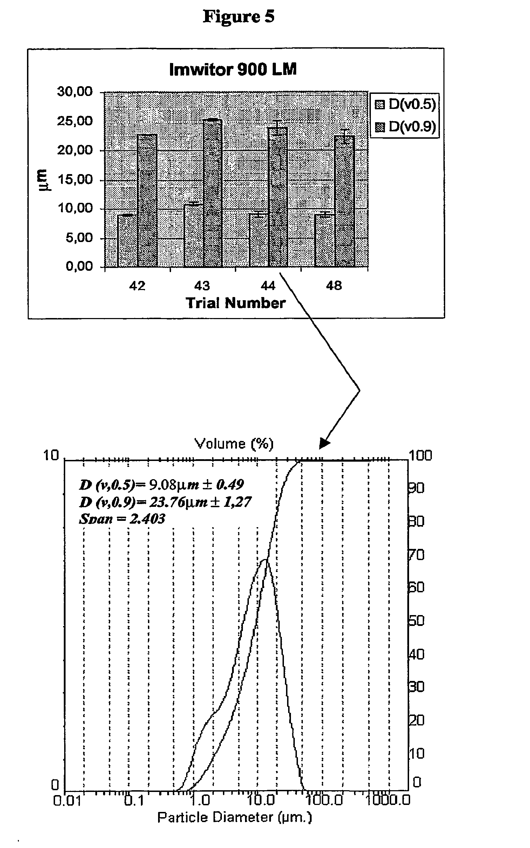

**Figure 5****:** LD results of the Imwitor 900 LM batches prepared with the spraying (nebulizing) nozzle under similar process conditions for reproducibility evaluation. The error bars in the histogram graph refer to the standard deviation calculated on three samples from the same batch. Frequency (bell shaped) and undersize (sigma shaped) curves are average curves of three samples from the same batch.

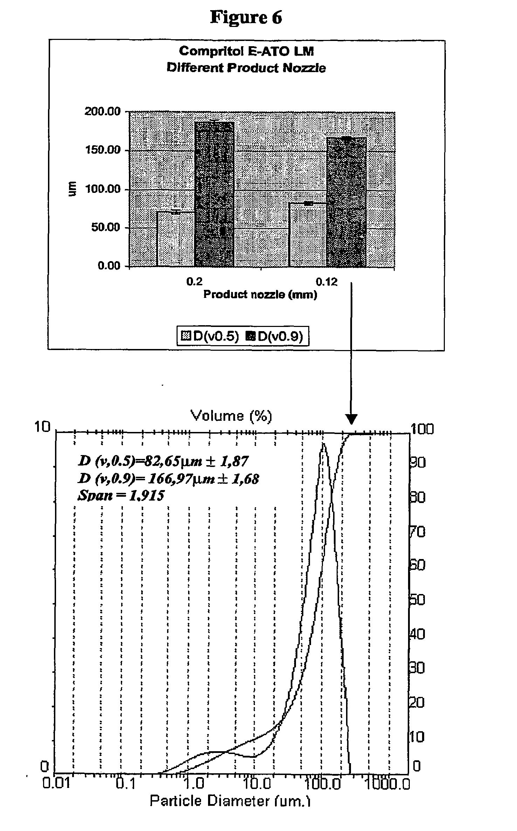

**Figure 6****:** LD results of the Compritol e ATO LM batches prepared using two different capillary flow nozzle diameters. The error bars in the histogram graph refer to the standard deviation calculated on three samples from the same batch. Frequency (bell shaped) and undersize (sigma shaped) curves are average curves of three samples from the same batch.

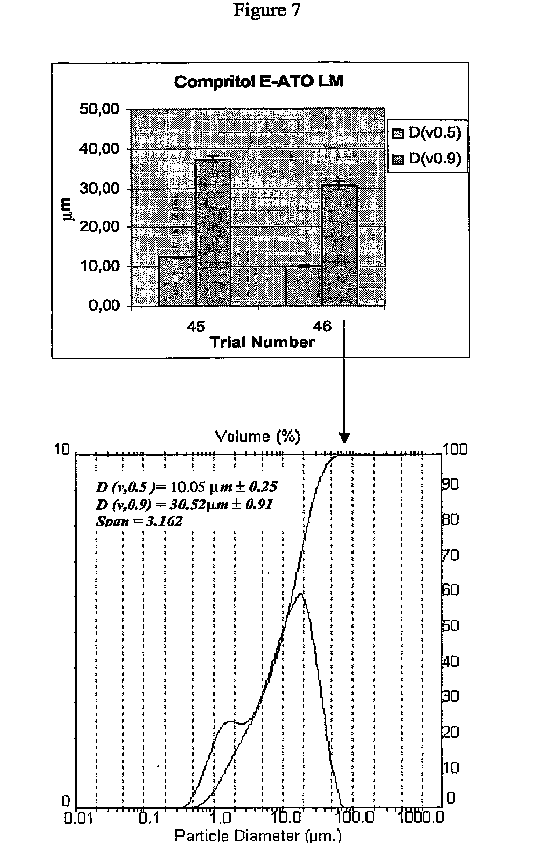

**Figure 7****:** LD results of the Compritol E ATO LM batches prepared with the spraying (nebulizing) nozzle under similar process conditions for reproducibility evaluation. The Y error bars in the histogram graph refer to the standard deviation calculated on three samples from the same batch. Frequency (bell shaped) and undersize (sigma shaped) curves are average curves of three samples from the same batch.

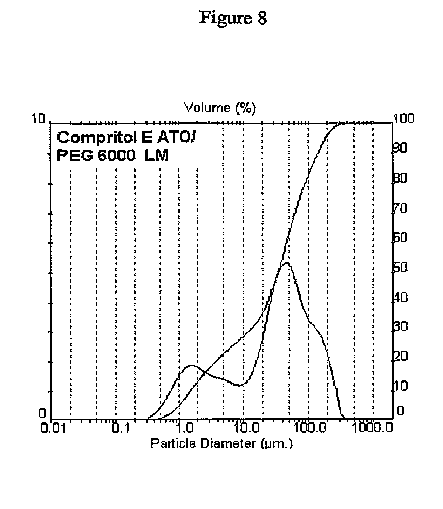

**Figure 8****:** LD data and graphs (frequency (bell-shaped) and undersize (sigma-shaped) curves) of the Compritol e ATO/PEG 6000 LM.

### Examples

### Example 1- Preparation of microparticles according to the process of the invention

### 1.1 Melting of the materials and drug incorporation into the matrix:

The substances to be processed (lipid and/or polymer mixture) are melted in a thermostated bath, at a proper temperature, depending on the substances used. A drug can be added to the molten matrix, under constant stirring. The molten mass is then poured into the feeding vessel of the atomizer, thermostated at a suitable temperature (so to keep the mass in the liquid form). Alternatively, this first melting step can be also performed directly in the feeding vessel of the atomizer, since such vessel is equipped with a stirring tool.

Alternatively a certain amount of solvent can be added to the mixture. This would allow the incorporation of a drug into the matrix prior dissolution into a suitable solvent, or allow the preparation of compositions by intimately mixing different excipients (such as polymers and lipids of different types)

### 1.2 Material processing

The molten mass is then conveyed, under controlled pressure, through the nozzle (which is also thermostated at a suitable temperature), to the spraying (nebulizing) tower, where microparticles form as a result of spraying (nebulizing) and cooling effect of liquid CO₂. The product in powder form is then collected from an appropriate opening at the bottom of the spraying (nebulizing) tower.

### 1.3 Physico-chemical characterization of the micro particles

The microparticles described in the examples below have been characterized mainly for their particle size. Thermal analysis and optical microscope analysis have also been performed on some samples.

### 1.3. Particle size analysis

The microparticles/microspheres) were characterized for their particle size distribution using Laser Diffractometer (LD) Mastersizer Microplus MAF 5001 (Malvern). The small volume sample dispersion unit (100 ml capacity) was used for the analysis. A slurry was first prepared adding about 50 µl of Tween 20 ™ (also known generically as Polysorbate 20; it is a surfactant; sorbitan mono-9octadecenoate poly(oxy-1,1-ethanedlyl)), as suspending agent, to 30-40 mg of microparticles (this amount of material gives an obscuration value between 10 and 30%, as requested by analysis criteria). 5 ml of deionized water were added stepwise to the slurry and the obtained suspension was sonicated for 3 minutes. The suspension was then poured into the small volume unit and kept circulating in the dispersion unit at a pump speed of 1500 rpm. Three measurements were taken for each sample and the data were processed using Fraunhofer presentation. Each batch was analyzed in triplicate.

The size of the population is described by the following size parameters:
D (v, 0.1) means that 10% (in volume) of the particles have a diameter below this value.
D (v, 0.5) means that 50% (in volume) of the particles have a diameter below this value.
D (v, 0.9) means that 90% (in volume) of the particles have a diameter below this value.

Span is calculated as (D (v, 0.9 - D (v, 0.1)) / D (v, 0.5), and is a measure of the diameter distribution width.

### 1.3.2 Thermal Differential Scannning Analysis (DSC) analysis.

The DSC analyses were performed in both heating and cooling mode, using the Pyris 1 Differential Scanning Calorimeter (Perkin Elmer), at the following operative conditions:
Sample weight: 3-6 mg
Range: 0°C-100°C
Scan rate: 5 °C/min
Pan capacity: 50µL (pan with holes)
Purge gas (N₂) flow: 20 cc/min.

### 1.3.3 Morphology evaluation by optical microscope

Optical microscope analyses were performed using the Axiolab A (Zeiss) optical microscope (Axiovision software).

LM samples were placed on the microscope glass either as they are, or after suspension in water+Tween 20. For some samples, the suspension was analyzed after drying (at room conditions). The analysis was performed using 50x or 200x enlargement, under transmitted light, or, in few cases, in reflected light mode.

### Example 2 - Lipid Microparticles (LM)

### Materials

In the examples described below the following materials were tested:
Imwitor 900 (glyceryl monostearate), Condea
Compritol E ATO (glyceryl behenate), Gattefossé
Lutrol E 6000 (PEG 6000), Basf
Gelucire 50/13 (Stearoyl Macrogol glyceride: mixture of mono-, di- and triglycerides and mono- and di-fatty acid esters of polyethylene glycol), Gattefossé

### 2.1 Preparation of LM with the capillary flow nozzle using two different nozzle sizes

200 g of Imwitor 900 were melted in a thermostated water bath (75°C), poured into the feeding vessel and processed at the following process conditions:

| | |
|---|---|
| Product nozzle Ø | 0.12 and 0.25 mm |
| L CO₂ nozzle Ø | 0.25 mm |
| Product nozzle temperature | 115°C |
| Oven temperature | 90°C |
| Gaseous CO₂ pressure in the feeding vessel | 2 bar |
| L CO₂ pressure | about 60 bar |

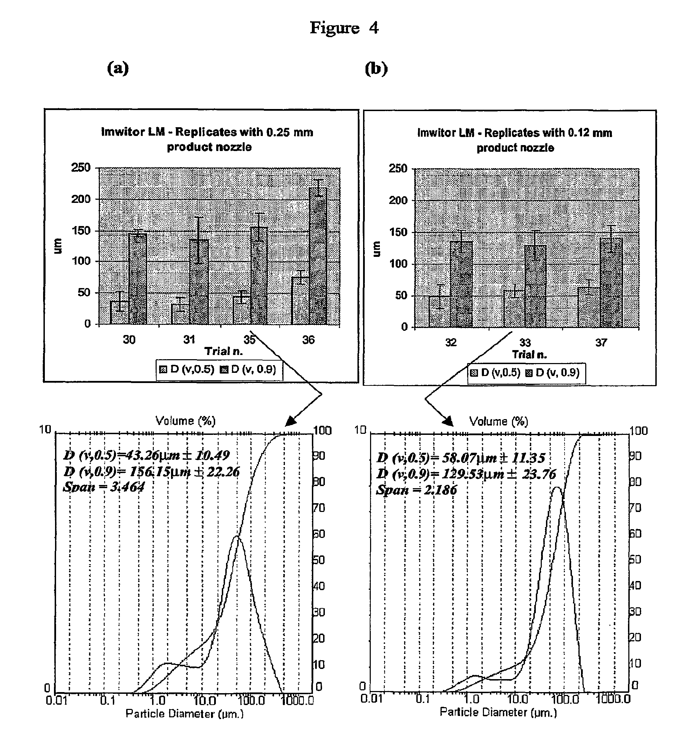

Replicates were performed, and the results of the particle size analysis are shown in Fig. 4. The particle size was also verified by optical microscope.

### 2.2 Preparation of Imwitor 900 LM using the spraying (nebulizing) nozzle

200 g of Imwitor 900 were melted in a thermostated water bath (75°C), poured into the feeding vessel and processed at the following process conditions:

| | |
|---|---|
| L CO₂ nozzle Ø | 0.25 mm |
| Product nozzle temperature | 115°C |
| Oven temperature | 90°C |
| Gaseous CO₂ pressure in the feeding vessel | 2-3 bar |
| Gaseous CO₂ pressure in the product nozzle | 5 bar |
| L CO₂ pressure | about 60 bar |

Replicates were performed, and the results of the particle size analysis are shown in Fig. 5. The particle size was also verified by optical microscope.

### 2.3 Preparation of LM made of Compritol E ATO with the capillary flow nozzle using two different nozzle sizes

200 g of Compritol E ATO were melted in a thermostated water bath (85°C), poured into the feeding vessel and processed at the following process conditions:

| | |
|---|---|
| Product nozzle Ø | 0.12 and 0.20 mm |
| L CO₂ nozzle Ø | 0.25 mm |
| Product nozzle temperature | 115°C |
| Oven temperature | 110°C |
| Gaseous CO₂ pressure in the feeding vessel | 2 bar |
| L CO₂ pressure | about 55 bar |

The results of the particle size analysis are shown in Fig. 6. The particle size was also verified by optical microscope.

### 2.4 Preparation of Compritol E ATO LM using the spraying (nebulizing) nozzle

200 g of Compritol E ATO were melted in a thermostated water bath (85°C), poured into the feeding vessel and processed at the following process conditions:

| | |
|---|---|
| L CO₂ nozzle Ø | 0.25 mm |
| Product nozzle temperature | 115°C |
| Oven temperature | 90°C |
| Gaseous CO₂ pressure in the feeding vessel | 3 bar |
| Gaseous CO₂ pressure in the product nozzle | 5 bar |
| L CO₂ pressure | about 60 bar |

Two replicates were performed, and the results of the particle size analysis are shown in Fig. 7. The particle size was also verified by optical microscope.

### 2.5 Preparation of Compritol E ATO - PEG 6000 LM using the capillary flow nozzle

200 g of a Compritol E ATO/PEG 6000 (8:2) mixture were melted in a thermostated water bath (85°C), poured into the feeding vessel and processed at the following process conditions:

| | |
|---|---|
| Product nozzle Ø | 0.25 mm |
| L CO₂ nozzle Ø | 0.25 mm |
| Product nozzle temperature | 130°C |
| Oven temperature | 100°C |
| Gaseous CO₂ pressure in the feeding vessel | 2 bar |
| L CO₂ pressure | about 55 bar |

The results of the particle size analysis are shown in Fig. 8. The particle size was also verified by optical microscope.

### 2. 6 Preparation of Gelucire 50/13 LM using the capillary flow nozzle

200 g of Gelucire 50/13 were melted in a thermostated water bath (60°C), poured into the feeding vessel and processed at the following process conditions:

| | |
|---|---|
| Product nozzle Ø | 0.25 mm |
| L CO₂ nozzle Ø | 0.25 mm |
| Product nozzle temperature | 60°C |
| Oven temperature | 60°C |
| Gaseous CO₂ pressure in the feeding vessel | about 4 bar |
| L CO₂ pressure | about 60 bar |

LD analysis was not performed, due to material partial solubilization in water (normally used as medium for LD analysis). The particle size of the product was also evaluated by optical microscope analysis.

### 2.7 Preparation of Gelucire 50/13 LMusing the spraying (nebulizing) nozzle

100 g of Gelucire 50/13 were melted in a thermostated water bath (60°C), poured into the feeding vessel and processed at the following process conditions:

| | |
|---|---|
| L CO₂ nozzle Ø | 0.25 mm |
| Product nozzle temperature | 100°C |
| Oven temperature | 80°C |
| Gaseous CO₂ pressure in the feeding vessel | 2 bar |
| Gaseous CO₂ pressure in the product nozzle | 2.5 bar |
| L CO₂ pressure | about 60 bar |

LD analysis was not performed, due to material partial solubilization in water (normally used as medium for LD analysis). The particle size of the product was also evaluated by optical microscope analysis.

### Conclusions

As shown in the Examples reported above, the process of the present invention allows to prepare microparticles having the following advantageous characteristics:
- controlled particle size of the product: **D (v, 0.5)** around **40-80 µm** when using *capillary flow nozzle,* and down to **15 µm**, **or 10 µm** (possibly 5 µm) when using the *spraying (nebulizing) nozzle* (these data refer to the material tested so far, that is mainly Imwitor 900 and Compritol E ATO)
- **Relatively narrow size distribution**
- **Spherical shape** of the particles

Such characteristics lead to applications as injectable microparticles, but also as delivery systems for oral, nasal and, potentially, pulmonary administration route.

## Claims

1. A process for cooling and atomizing liquid or pasty substance or mixture of substances, in which a liquid or pasty substance or mixture of substances is combined with gaseous carbon dioxide and the mixture of liquid or pasty substance or mixture of substances and gaseous carbon dioxide is then expanded and cooled by contacting a flux of liquid carbon dioxide, as a result the substance or mixture of substances is cooled and atomized and a product is obtained with a spherical shape of the particles and wherein the final average particle seize is comprised in a range between 2 and 100 µm.

2. The process according to claim 1, in which the liquid carbon dioxide has a pressure of from 6 to 72 bar and a temperature of 216 to 304 K.

3. The process according to claim 1, in which the liquid carbon dioxide has a pressure of from 30 to 70 bar and a temperature of from 230 to 304 K.

4. The process according to claim 1, in which the gaseous carbon dioxide has a pressure of from 50 to 68 bar and a temperature of from 291 to 301 K.

5. The process according to claim 3, in which the gaseous carbon dioxide in the storage vessel has a pressure of from 1 to 10 bar and a temperature of from 273 to 304 K.

6. The process according to one of the claims 1 to 5, in which the liquid or pasty substance/ mixture of substances and/or the mixture of liquid or pasty substance/mixture of substances and gaseous carbon dioxide is or are fed to at least one heatable or coolable line.

7. The process according to claim 1, in which the final average particle size is comprised in a range between 40 to 80 µm.

8. The process according to claim 7, in which the final average particle size is comprised in a range between 5 and 15 µm.

9. The process according to one of claims 1 to 8, in which the liquid or pasty substance/mixture of substances is mixed with the gaseous carbon dioxide in the storage vessel by means of a stirrer disposed in such vessel.

10. An apparatus for cooling liquid or pasty substance or mixture of substances which comprises:
i. a storage vessel for the liquid or pasty substance or mixture of substances, to which is allocated a line, in which a device for transporting the liquid or pasty substance or mixture of substances is disposed,
ii. a source of liquid carbon dioxide, to which source is allocated a line,
iii. a source of gaseous carbon dioxide, to which source is allocated a line which line has a connection with the line transporting the liquid or pasty substance/ mixture of substances,
iv. an expansion chamber in which the liquid carbon dioxide and the liquid or pasty substance or mixture of substances mixed with the gaseous carbon dioxide are conveyed.

11. The apparatus according to claim 10, in which an apparatus for heating or cooling the line is disposed in the line allocated to the source of gaseous carbon dioxide.

12. The apparatus according to claim 10 to 11, wherein the source of gaseous and liquid carbon dioxide is contained in a thermostated cabinet.

13. The apparatus according to one of claims 10 to 12, in which an apparatus for heating or cooling the line is allocated to the line allocated to the storage vessel for the liquid or pasty substance or mixture of substances.

14. The apparatus according to one of claims 10 to 13, in which an apparatus for mixing is allocated to the storage vessel for the liquid or pasty substance or mixture of substances.

15. The apparatus according to one of claims 30 to 14, in which the expansion apparatus has two nozzles and two valves.

16. The apparatus according to one of claims 10 to 15, in which the nozzles and the valves have an isolating coating.

17. The apparatus according to one of claims 10 to 16, in which the nozzle is a capillary flow nozzle or a spraying (nebulizing) nozzle.

18. The apparatus according to one of claims 16 to 17, in which the valve is an open/closed valve or a control valve.

19. The use of the process according to claim 1 or of the apparatus according to claim 10 for pulverizing, pelleting, granulating and crystallizing.

20. The use of the process according to claim 1 or of the apparatus according to claim 11 for the production of microparticles for pharmaceutical uses.

21. The use of the process according to claim 1 or of the apparatus according to claim 10, wherein the microparticles contain one or more therapeutic active substances.

## Patentansprüche

1. Verfahren zum Kühlen und Zerstäuben einer flüssigen oder pastösen Substanz oder eines flüssigen oder pastösen Substanzgemischs, worin eine flüssige oder pastöse Substanz oder ein flüssiges oder pastöses Substanzgemisch mit gasförmigem Kohlendioxid vereinigt wird und das Gemisch aus flüssiger oder pastöser Substanz oder flüssigem oder pastösem Substanzgemisch und gasförmigem Kohlendioxid dann expandiert und gekühlt wird durch In-Kontakt-bringen mit einem Strom von flüssigem Kohlendioxid, wobei als Ergebnis die Substanz oder das Substanzgemisch gekühlt und zerstäubt werden und ein Produkt mit einer sphärischen Teilchenform erhalten wird und worin die mittlere Teilchenendgröße einen Bereich von zwischen 2 und 100 µm umfasst.

2. Verfahren nach Anspruch 1, worin das flüssige Kohlendioxid einen Druck von 6 bis 72 bar und eine Temperatur von 216 bis 304 K aufweist.

3. Verfahren nach Anspruch 1, worin das flüssige Kohlendioxid einen Druck von 30 bis 70 bar und eine Temperatur von 230 bis 304 K aufweist.

4. Verfahren nach Anspruch 1, worin das gasförmige Kohlendioxid einen Druck von 50 bis 68 bar und eine Temperatur von 291 bis 301 K aufweist.

5. Verfahren nach Anspruch 3, worin das gasförmige Kohlendioxid in dem Lagerbehälter einen Druck von 1 bis 10 bar und eine Temperatur von 273 bis 304 K aufweist.

6. Verfahren nach einem der Ansprüche 1 bis 5, worin die/das flüssige oder pastöse Substanz/Substanzgemisch und oder das Gemisch von flüssiger oder pastöser Substanz/ Substanzgemisch und gasförmigem Kohlendioxid in mindestens eine beheizbare oder kühlbare Leitung eingespeist wird/werden.

7. Verfahren nach Anspruch 1, worin die mittlere Teilchenendgröße in einem Bereich zwischen 40 bis 80 µm umfasst ist.

8. Verfahren nach Anspruch 7, worin die mittlere Teilchenendgröße in einem Bereich zwischen 5 und 15 µm umfasst ist.

9. Verfahren nach einem der Ansprüche 1 bis 8, worin die/das flüssige oder pastöse Substanz/Gemisch von Substanzen mit gasförmigem Kohlendioxid in dem Lagerbehälter mit einem Rührer, der in dem Behälter angeordnet ist, gemischt wird.

10. Vorrichtung zum Kühlen einer flüssigen oder pastösen Substanz oder eines flüssigen oder pastösen Substanzgemischs, umfassend:
i) einen Lagerbehälter für die flüssige oder pastöse Substanz oder das flüssige oder pastöse Substanzgemisch, welchem eine Leitung zugeordnet ist, in welcher eine Vorrichtung zum Transportieren der flüssigen oder pastösen Substanz oder des flüssigen oder pastösen Substanzgemischs angeordnet ist;
ii) eine Quelle für flüssiges Kohlendioxid, wobei der Quelle eine Leitung zugeordnet ist;
iii) eine Quelle für gasförmiges Kohlendioxid, wobei der Quelle eine Leitung zugeordnet ist, die eine Verbindung mit der Leitung hat, die die/das flüssige oder pastöse Substanz/Substanzgemisch transportiert;
iv) eine Expansionskammer, in welcher das flüssige Kohlendioxid und die/das flüssige oder pastöse Substanz oder Substanzgemisch, welche mit dem gasförmigen Kohlendioxid gemischt werden, transportiert werden.

11. Vorrichtung nach Anspruch 10, worin eine Vorrichtung zum Erwärmen oder Kühlen der Leitung in der Leitung angeordnet wird, die der Quelle für gasförmiges Kohlendioxid zugeordnet ist.

12. Verfahren nach Anspruch 10 bis 11, worin die Quelle für gasförmiges und flüssiges Kohlendioxid in einer thermostatisierten Kammer enthalten ist.

13. Vorrichtung nach einem der Ansprüche 10 bis 12, worin eine Vorrichtung zum Erwärmen oder Kühlen der Leitung derjenigen Leitung zugeordnet ist, die dem Lagerbehälter für die/das flüssige oder pastöse Substanz oder Substanzgemisch zugeordnet ist.

14. Vorrichtung nach einem der Ansprüche 10 bis 13, worin eine Vorrichtung zum Mischen dem Lagerbehälter für die/das flüssige oder pastöse Substanz oder Substanzgemisch zugeordnet ist.

15. Vorrichtung nach einem der Ansprüche 10 bis 14, worin die Expansionsvorrichtung zwei Düsen und zwei Ventile aufweist.

16. Vorrichtung nach einem der Ansprüche 10 bis 15, worin die Düsen und die Ventile eine isolierende Beschichtung aufweisen.

17. Vorrichtung nach einem der Ansprüche 10 bis 16, worin die Düse eine Kapillarflussdüse oder eine Sprüh (Vernebelungs)-Düse ist.

18. Vorrichtung nach einem der Ansprüche 16 bis 17, worin das Ventil ein offen/geschlossen-Ventil oder ein Steuerungsventil ist.

19. Verwendung des Verfahrens nach Anspruch 1 oder der Vorrichtung nach Anspruch 10 zum Pulverisieren, Pelletieren, Granulieren und Kristallisieren.

20. Verwendung des Verfahrens nach Anspruch 1 oder der Vorrichtung nach Anspruch 11 zur Herstellung von Mikroteilchen für pharmazeutische Anwendungen.

21. Verwendung des Verfahrens nach Anspruch 1 oder der Vorrichtung nach Anspruch 10, worin die Mikroteilchen eine oder mehrere therapeutisch wirksame Substanzen enthalten.

## Revendications

1. Procédé permettant de refroidir et de pulvériser une substance liquide ou pâteuse ou un mélange de telles substances, dans lequel on combine une substance liquide ou pâteuse ou un mélange de telles substances avec du dioxyde de carbone gazeux et l'on fait ensuite s'expanser et refroidir le mélange de substance liquide ou pâteuse ou de mélange de telles substances et de dioxyde de carbone gazeux en le mettant en contact avec un courant de dioxyde de carbone liquide, ce qui a pour résultat que la substance ou le mélange de substances est refroidi et pulvérisé et que l'on obtient un produit en particules de forme sphérique dont la taille moyenne finale est comprise dans l'intervalle allant de 2 à 100 µm.

2. Procédé conforme à la revendication 1, dans lequel le dioxyde de carbone liquide se trouve sous une pression de 6 à 72 bars et à une température de 216 à 304 K.

3. Procédé conforme à la revendication 1, dans lequel le dioxyde de carbone liquide se trouve sous une pression de 30 à 70 bars et à une température de 230 à 304 K.

4. Procédé conforme à la revendication 1, dans lequel le dioxyde de carbone gazeux se trouve sous une pression de 50 à 68 bars et à une température de 291 à 301 K.

5. Procédé conforme à la revendication 3, dans lequel le dioxyde de carbone gazeux présent dans la cuve de stockage se trouve sous une pression de 1 à 10 bars et à une température de 273 à 304 K.

6. Procédé conforme à l'une des revendications 1 à 5, dans lequel la substance liquide ou pâteuse ou le mélange de telles substances et/ou le mélange de substance liquide ou pâteuse ou de mélange de telles substances et de dioxyde de carbone gazeux est ou sont envoyé(s) vers au moins une conduite qui peut être chauffée ou refroidie.

7. Procédé conforme à la revendication 1, dans lequel la taille moyenne finale des particules est comprise dans l'intervalle allant de 40 à 80 µm.

8. Procédé conforme à la revendication 1, dans lequel la taille moyenne finale des particules est comprise dans l'intervalle allant de 5 à 15 µm.

9. Procédé conforme à l'une des revendications 1 à 8, dans lequel la substance liquide ou pâteuse ou le mélange de telles substances est mélangé avec le dioxyde de carbone gazeux dans la cuve de stockage, au moyen d'un agitateur disposé dans cette cuve.

10. Appareillage permettant de refroidir une substance liquide ou pâteuse ou un mélange de telles substances, lequel appareillage comporte :
i) une cuve servant à stocker la substance liquide ou pâteuse ou le mélange de telles substances, à laquelle est affectée une conduite dans laquelle est placé un dispositif servant à transporter la substance liquide ou pâteuse ou le mélange de telles substances,
ii) une source de dioxyde de carbone liquide, source à laquelle est affectée une conduite,
iii) une source de dioxyde de carbone gazeux, source à laquelle est affectée une conduite qui est elle-même connectée à la conduite dans laquelle est transporté(e) la substance liquide ou pâteuse ou le mélange de telles substances,
iv) et une chambre d'expansion dans laquelle sont envoyés le dioxyde de carbone liquide et la substance liquide ou pâteuse ou le mélange de telles substances, mélangé(e) avec le dioxyde de carbone gazeux.

11. Appareillage conforme à la revendication 10, dans lequel un dispositif permettant de chauffer ou de refroidir la conduite est placé dans la conduite affectée à la source de dioxyde de carbone gazeux.

12. Appareillage conforme à la revendication 10 ou 11, dans lequel la source de dioxyde de carbone liquide et gazeux est enfermée dans une enceinte thermostatée.

13. Appareillage conforme à l'une des revendications 10 à 12, dans lequel un dispositif permettant de chauffer ou de refroidir la conduite est affecté à la conduite affectée à la cuve servant à stocker la substance liquide ou pâteuse ou le mélange de telles substances.

14. Appareillage conforme à l'une des revendications 10 à 13, dans lequel un dispositif de mélangeage est affecté à la cuve servant à stocker la substance liquide ou pâteuse ou le mélange de telles substances.

15. Appareillage conforme à l'une des revendications 10 à 14, dans lequel le dispositif d'expansion comporte deux buses et deux vannes.

16. Appareillage conforme à l'une des revendications 10 à 15, dans lequel les buses et les vannes portent un revêtement isolant.

17. Appareillage conforme à l'une des revendications 10 à 16, dans lequel la buse est une buse à écoulement capillaire ou une buse de pulvérisation (nébuliseur).

18. Appareillage conforme à l'une des revendications 16 et 17, dans lequel la vanne est une vanne ouvert/fermé ou une vanne de régulation.

19. Utilisation d'un procédé conforme à la revendication 1, ou d'un appareillage conforme à la revendication 10, pour des opérations de pulvérisation, de pastillage, de granulation ou de cristallisation.

20. Utilisation d'un procédé conforme à la revendication 1, ou d'un appareillage conforme à la revendication 10, pour la production de microparticules destinées à être utilisées en pharmacie.

21. Utilisation d'un procédé conforme à la revendication 1, ou d'un appareillage conforme à la revendication 10, dans laquelle les microparticules contiennent une ou plusieurs substance(s) active(s) thérapeutique(s).
